# EUROPEAN PATENT SPECIFICATION

(11) **EP 3 428 655 B1**
(45) Date of publication and mention of the grant of the patent: **01.07.2020**
(21) Application number: 16893461.0
(22) Date of filing: 09.03.2016
(51) Int. Cl.: G01P 5/00, G01P 5/24, G01P 21/02, G01S 7/52, G01S 15/60

(54) **METER FOR SHIP SPEED RELATIVE TO WATER AND METHOD FOR CORRECTING MEASUREMENT VALUES OF METER FOR SHIP SPEED RELATIVE TO WATER**
MESSGERÄT FÜR SCHIFFGESCHWINDIGKEIT IN BEZUG AUF WASSER UND VERFAHREN ZUR KORREKTUR VON MESSWERTEN DES MESSGERÄTS FÜR SCHIFFGESCHWINDIGKEIT IN BEZUG AUF WASSER
INDICATEUR DE VITESSE DE NAVIRE PAR RAPPORT À L'EAU ET PROCÉDÉ DE CORRECTION DE VALEURS DE MESURE D'INDICATEUR DE VITESSE DE NAVIRE PAR RAPPORT À L'EAU

(43) Date of publication of application: 16.01.2019
(73) Proprietor: Furuno Electric Co., Ltd., Hyogo 662-8580 (JP)
(72) Inventor: SUDO, Yasuhiro, Tokyo 100-0005 (JP); ANDO, Hideyuki, Tokyo 100-0005 (JP)
(74) Representative: CSY London
(86) International application number: PCT/JP2016/057322
(87) International publication number: WO 2017/154129

(56) References cited:
- EP-A1- 2 816 359
- JP-A- S6 444 877
- JP-A- 2012 073 037
- JP-A- 2013 167 560
- US-B1- 6 485 341
- L Tetly ET AL: "Chapter 3 Speed measurement" In: "Navigation systems", 1 January 2001 (2001-01-01), Elsevier Ltd., XP055206497, pages 45-87, * page 63 - page 65 * * page 69 * * page 71 - page 72 *

## Description

### TECHNICAL FIELD

The present disclosure relates to a technology to measure a speed of a ship, and particularly to a technology which is effective when applied to a log speed meter which measures a log speed and a method of correcting measurement of the log speed meter.

### BACKGROUND ART

Sound-type (Doppler-type) speed meters of ships have been known as speed meters which measure a log speed of the ship (hereinafter, simply referred to as "the ship speed"). The Doppler-type log speed meter may be influenced by environment of the measurements even if the speed meter is highly-accurate. For example, when measurements at shallow water depth locations, the measurements are influenced by a boundary layer due to a hull. On the other hand, when measurements at deep water depth locations, conditions between the circumference of the hull and flows of sea water (current, ocean current, etc.), and other conditions (water pressure, sea water density, salt concentration, etc.) may vary, thereby the measurements may be influenced by the variations. Therefore, it is normally common to measure a flow velocity at a water depth within a range of 3m to 20m from the bottom of the ship, which is neither too shallow nor too deep.

This water depth is normally outside of the boundary layer; however, some influences caused by disturbance of the hull still remain. Thus, generally, operations are performed after actually measuring a log speed by a log speed meter upon a sea trial operation of a target ship, as well as measuring a ground ship speed by a ground speed meter utilizing GPS (Global Positioning System) etc., and setting a correction coefficient based on a relative difference between the speeds. That is, based on an assumption that the flow of sea water is uniform in depth directions, does not change with time, etc., the correction coefficient is applied to and is corrected by the flow velocity which is directly measured by the log speed meter to cancel, as much as possible, an error containing influences due to the conditions, such as the flow of sea water, due to the hull, etc.

Note that, although the thickness of the boundary layer may vary depending on various environmental factors, for example, JP2013-167560A (Patent Document 1) discloses a multilayer-type log speed meter as a technology which appropriately obtains the log speed outside the boundary layer even in such a case. This multilayer-type log speed meter detects a plurality of reflective waves which are reflected by reflective objects at different water depths corresponding to an acoustic wave emitted toward the seabed, and calculates the flow velocity at each water depth based on a frequency difference between the acoustic wave and each reflective wave. Then, the flow velocity at a water depth where a rate of change in the flow velocity in the water depth direction becomes below a given threshold and is converged, is outputted as the log speed.

As described above, when using the Doppler-type log speed meter, accuracy is normally increased by applying the correction coefficient to the measured flow velocity. This correction coefficient can be equally applied in a horizontally development manner to ships of the same model once it is first determined when the sea trial operation etc. is performed.

Meanwhile, once the correction coefficient is set for the target ship, the same correction coefficient value is always used regardless of the change in the navigational condition. However, it is found that, due to a progress of simulation technology etc., for example, a flow velocity distribution varies depending on the navigational condition, such as a draft state and a speed of the ship, i.e., the correction coefficient varies.

Thus, one purpose of the present disclosure is to provide a log speed meter and a method of correcting measurement of the log speed meter, capable of obtaining a suitable correction coefficient for calculating a log speed based on a measured flow velocity according to navigational condition of a ship. JP 64-44877 discloses a Doppler speed log system comprising a transmitter-receiver and an operator. The ship's log speed is calculated by the operator and output to a correction mechanism. The number of rotations of a propeller and driving horsepower from a shaft horsepower meter mounted to the propeller rotary shaft are recorded on an engine data logger and further output to the correction mechanism. Then, the correction of the ship's speed is performed and an accurate ship's speed is output to a display panel.

L Tetly et al, "Navigation Systems", Elsevier, 1 January 2001, Chapter 3 "Speed measurement" discloses techniques for ship speed measurement, one of them based on Doppler measurement. It is disclosed that the velocity error due to the salinity and temperature can be virtually eliminated by mounting salinity and temperature sensors in the transducer array, and processing data from both sensors to provide corrective information.

According to one aspect of the present invention there is provided a Doppler-type log speed meter as defined in claim 1.

According to another aspect of the present invention there is provided a method of measuring a log speed of a ship using a Doppler-type log speed meter as defined in claim 5.

Preferred features of the present invention are recited in the dependent claims.

According to the representative embodiment of the present disclosure, the suitable correction coefficient for calculating the log speed based on the measured flow velocity can be obtained according to the navigational condition of the ship. Therefore, the measurement accuracy of the log speed can be increased. The above and the other purposes and new features of the present disclosure will become apparent from the description and the accompanying drawings of this specification.
Fig. 1 is a view schematically illustrating one example of a configuration of a log speed meter which is one embodiment of the present disclosure.
Fig. 2 is a view illustrating one example of a relation between a navigational condition and a correction coefficient in one embodiment of the present disclosure.
Fig. 3 is a flowchart schematically illustrating one example of a flow of measurement processing of a log speed in one embodiment of the present disclosure.

### MODE FOR CARRYING OUT THE DISCLOSURE

Hereinafter, one embodiment of the present disclosure is described in detail based on the drawings. Note that, throughout the drawings illustrating this embodiment, the same reference characters are given in principle to the same components to omit redundant description. However, for a component which is described given a reference character in a certain figure(s), it may be described with the same reference character without illustrating again in the description of other figures.

### [Entire Configuration]

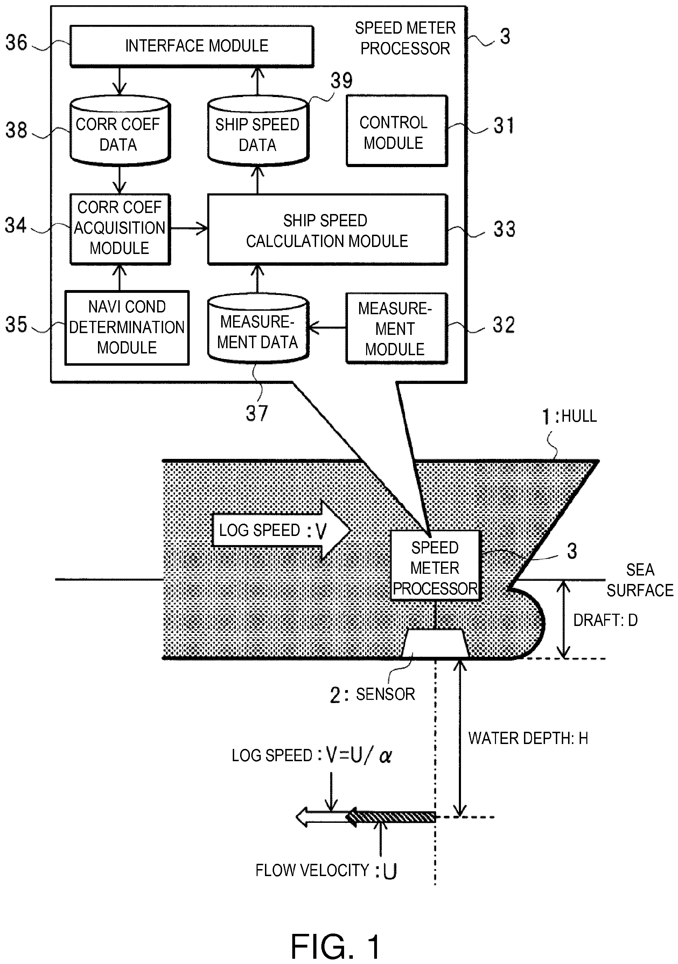

Fig. 1 is a view schematically illustrating one example of a configuration of a log speed meter which is one embodiment of the present disclosure. The log speed meter of this embodiment may have fundamentally a similar configuration to the common Doppler-type log speed meter described above. That is, this log speed meter may measure a flow velocity at a water depth of about 20m from the bottom of a ship, apply a given correction coefficient to the flow velocity, and output it as a log speed. In this embodiment, the correction coefficient may not only one and they may be variable according to a navigational condition. Therefore, measurement accuracy of the log speed is increased by acquiring and applying the correction coefficient corresponding to the navigational condition.

Although in this embodiment the Doppler-type log speed meter is described as one example, similar techniques may also be theoretically applicable to log speed meters, current meters, etc. of other types. Note that, although a "water depth" precisely refers to a depth from a water surface or a fluid surface where a hull 1 of the ship floats, such as a sea surface, a depth from the bottom surface of the hull 1 may also be described as the "water depth" for convenience in the following description.

The log speed meter of this embodiment may be comprised of a sensor 2 installed in the hull 1, and a speed meter processor 3, for example. For example, the sensor 2 may be comprised of a transducer etc. which is installed in a bottom part of the hull 1 or a nearby location thereof, emits a pulse-shaped acoustic wave at a given frequency toward the seabed, receives a reflective wave of the acoustic wave, and outputs information, such as a time difference between the emission and the reception, and a frequency of the received reflective wave.

Note that, the example of Fig. 1 illustrates, but not limited to, the configuration in which a single sensor 2 is installed, and the sensor 2 emits the acoustic wave in the given direction toward the seabed and acquires the flow velocity in a direction from the bow to the stern of the hull 1 based on a measured flow velocity component of the direction. For example, it may also be configured to calculate a flow velocity in arbitrary directions other than from the bow to the stern. Alternatively, it may be configured to have a plurality of sensors 2 which emit the acoustic wave in different directions, and acquire flow velocities in arbitrary directions as the flow velocity component in the acoustic wave emitting direction of each sensor 2 (or a synthesized flow velocity of these components).

The speed meter processor 3 may have a function to control operation of the sensor 2, and acquire an output result from the sensor 2 and process, such as calculate, a log speed V. The speed meter processor 3 may be implemented as dedicated hardware which is comprised of integrated circuit(s), memory or memories, input/output device(s), which are designed to realize each function described later, or may be implemented as general-purpose information processing device(s), such as PC(s) (Personal Computer(s)) or software which run on the device(s).

The speed meter processor 3 may have, for example, each module, such as a control module 31, a measurement module 32, a ship speed calculation module 33, a correction coefficient acquisition module 34, a navigational condition determination module 35, and an interface module 36, and each data store, such as measurement data 37, correction coefficient data 38, and ship speed data 39. The control module 31 may have a function to control operation of each module of the speed meter processor 3 automatically based on given contents or manually based on an instruction etc. from a user through the interface module 36 which will be described later. The measurement module 32 may have a function to perform a measurement by the sensor 2 and acquire the result of the measurement. As described above, specifically, it may acquire the data of the time difference between the transmission wave emitted from the sensor 2 and the received reflective wave, and the frequency of the reflective wave. The acquired data may be, for example, recorded chronologically as the measurement data 37.

The ship speed calculation module 33 may have a function to calculate the (true) log speed V based on the contents of the measurement data 37 and record the calculation results as the ship speed data 39. That is, it may calculate a flow velocity U at a target water depth H (e.g., about 20m from the bottom of the ship) based on the contents of the measurement data 37, and then calculate the log speed V (=U/α) by applying a correction coefficient α acquired by the correction coefficient acquisition module 34 which will be described later to the flow velocity U. Note that the log speed meter of this embodiment may be configured by using a multilayer-type log speed meter as disclosed in Patent Document 1. In this case, the ship speed calculation module 33 calculates the respective flow velocities U at the plurality of water depths H, and uses the flow velocity U at the water depth where the rate of change in the flow velocity U become below the given threshold and converged as the foundation of calculating the log speed V.

The correction coefficient acquisition module 34 may acquire the correction coefficient α corresponding to the navigational condition from the contents of the correction coefficient data 38 based on parameter values of the navigational condition outputted from the navigational condition determination module 35 described later. The parameter of the navigational condition includes a draft D of the hull 1 and/or a ship speed (the flow velocity U), and may further comprise a ship model (the shape of the hull 1), and the water depth H at which the flow velocity is measured, as described later. Here, for the ship model, the shape of the hull 1 where the log speed meter is actually installed is fundamentally invariable. Therefore, once information on the ship model is set when the log speed meter is installed, the contents may be used permanently after that.

The navigational condition determination module 35 may determine the navigational condition of the ship and outputs them as the parameter values. Variables among the parameters of the navigational condition of this embodiment described above may be the draft D, the flow velocity U, and the water depth H. Here, since the flow velocity U is calculated by the ship speed calculation module 33, the navigational condition determination module 35 may not be necessary to acquire the flow velocity U. The water depth H may become an invariable value (e.g., 20m etc. from the bottom of the ship) when the log speed meter of this embodiment is constituted by the common Doppler-type log speed meter. Moreover, for example, also when the log speed meter is constituted by the multilayer-type log speed meter as disclosed in Patent Document 1, the target water depth H may be determined by the ship speed calculation module 33. Therefore, the navigational condition determination module 35 may not be necessary to acquire the water depth H.

For example, the draft D may be measured and acquired by a sensor (not illustrated) provided to the navigational condition determination module 35, or an input of the quantity of ballast water may be received from the interface module 36 and the draft D may then be calculated based on the input. Alternatively, an input of a value of the draft D may directly be received from the interface module 36. Note that a relation between each parameter of the navigational condition and the correction coefficient α will be described later.

The interface module 36 may have a function to provide an interface of input and output to/from the speed meter processor 3. For example, the contents of the ship speed data 39 calculated by the ship speed calculation module 33 may be displayed and outputted to a display unit (not illustrated). Moreover, the interface module 36 may input and output the accumulated data of the ship speed data 39, the measurement data 37, etc., and the setting data of the correction coefficient data 38 etc. through an external recording medium or a network which are not illustrated. Moreover, the interface module 36 may accept an input of the operational instruction or data from the user through a console panel, a remote control, a touch panel, etc. which are comprised of button(s), dial(s), etc., which are not illustrated.

Note that, when the speed meter processor 3 is implemented, the respective modules and all the functions thereof may not be necessarily implemented on the hull 1 as a physically integral component. For example, they may be divided into a plurality of devices etc. on the hull 1, and may collaborate with each other. Alternatively, for example, it may be configured such that the calculation processing of the log speed V and processing of a part of the acquisition, application, etc. of the correction coefficient α by the ship speed calculation module 33 and the correction coefficient acquisition module 34 may be performed at other locations, such as on land, on other ships, etc., without performing on the hull 1. Here, the measurement data 37 may be taken out to other locations and may be processed asynchronously, or may be processed synchronously utilizing wireless communications.

### [Correction Coefficient]

As described above, once the correction coefficient is set for the target ship in the conventional technology, the same value is always used regardless of the navigational condition. However, it has become clear by a progress of simulation technology, such as Computational Fluid Dynamics (CFD) analysis, that the correction coefficient α varies depending on the navigational condition of the ship. The navigational condition used as parameters which affects the correction coefficient includes the draft D and/or the ship speed (the flow velocity U or the log speed V), and may further include the ship model (the shape of the hull 1), and the water depth H at which the flow velocity is measured, in the example of Fig. 1.

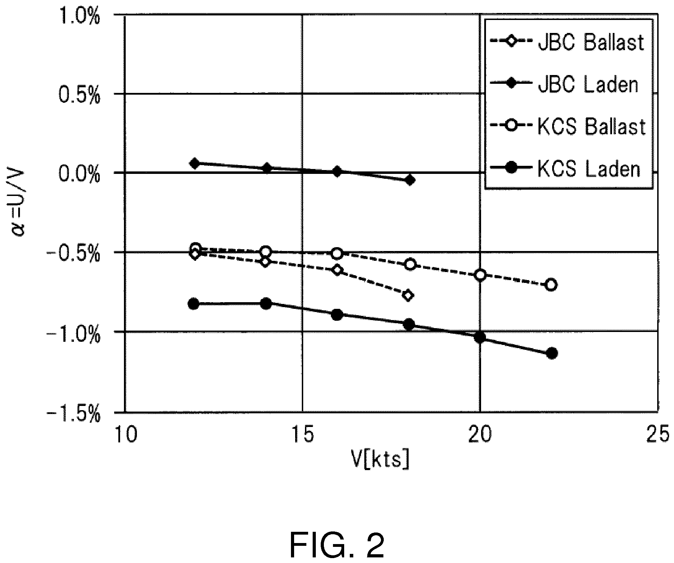

Fig. 2 is a view illustrating one example of a relation between the navigational condition and the correction coefficient. Here, as the shape of the hull 1 which is one of the parameters of the navigational condition, a bulk carrier (e.g., JBC (Japan Bulk Carrier)) and a container ship (e.g., KCS (Kriso Container Ship)) are used as examples. As a draft state for each ship model, a state of change in the correction coefficient α (=U/V) of each ship speed (the true log speed V in the example of Fig. 2) in two kinds of states, a ballast (empty load) state and a loaded (Laden) state, is shown by a graph. Note that the flow velocity U is measured at the water depth H of 20m from the ship bottom of the hull 1.

As illustrated, it can be seen that the value of α changes about 0.1 to 0.3% according to the change in the ship speed (the log speed V) even for the ships of the same model and the same draft state. Moreover, it can be seen that the value of α changes about 0.3 to 0.6% between the ballast state and the loaded state of the draft state, even for the ships of the same model. Moreover, it is apparent that the values of α differ (graphs differ) depending on the ship model. For the bulk-cargo ship (JBC), it can be seen that α increases when the draft state shifts from the ballast state to the loaded state, for the container ship (KCS), α decreases conversely, etc. Therefore, the characteristics differ greatly between the ship models.

In this embodiment, such characteristics of the correction coefficient α (correction coefficient models) may be obtained beforehand, and the characteristics may be recorded beforehand on the speed meter processor 3 installed in each ship as the correction coefficient data 38. The correction coefficient model, i.e., the format of the correction coefficient data 38 is not limited in particular. For example, the characteristics may be held as a table where a combination for every range of each parameter value of the navigational condition, and the value of the correction coefficient α are corresponded to each other. Alternatively, each graph as illustrated in Fig. 2 may be approximated as a function, and this function for obtaining the correction coefficient α may be defined.

In this embodiment, as described above, the parameters of the navigational condition are the draft D and/or the flow velocity U, and may further include the ship model and the water depth H. The parameters may suitably be taken into the correction coefficient model, as long as the parameters affect the correction coefficient α (e.g., parameters which may be substitutes of the water depth H, such as a water pressure, as well as a sea water temperature, a sea water density, a salt concentration, etc. at the water depth H). Moreover, it is not essential to use all the parameters, and one or more parameters may suitably be combined and may be taken into the correction coefficient model.

Moreover, in the example of Fig. 2, although the draft D is only distinguished between the ballast state and the loaded state, the correction coefficient model may be generated for every concrete numerical value (or numerical range), for example. The values of these parameters may be detected and measured by the sensor (not illustrated) provided to the navigational condition determination module 35, or may be inputted and set through the interface module 36 by the user.

When generating the correction coefficient model also containing those illustrated in the example of Fig. 2, the technique of simulations, such as CFD, may also be used, for example. On the other hand, since the simulation cannot perform the modeling of fluid perfectly, the accuracy is limited. Moreover, even if a tank test using a scale model is performed, it is still difficult to acquire a precise correction coefficient model due to the difference in the Reynolds number etc. from the actual hull 1.

On the other hand, when the sea trial operations using the actual hull 1 are performed, by using the values actually measured using the log speed meter during an actual cruise in a real ocean space, a more-accurate correction coefficient model than those used for the CFD and the tank test may be obtained. Here, when the measurements are made using the common log speed meter, it may be difficult to actually measure the flow velocity U while changing the water depth H which is one of the parameters of the navigational condition, and even if this is possible, it may take time and effort. Moreover, it may be necessary to know the true log speed V at the actually-measured timing when determining the correction coefficient α, but this may be difficult to obtain by the common log speed meter.

Thus, in this embodiment, the multilayer-type log speed meter as disclosed in Patent Document 1 is used. Therefore, the flow velocities U at the plurality of water depths H may be efficiently measured from a shallow location to a deep location. In addition, since the flow velocity U at the water depth H where the change in the flow velocity U is sufficiently converged (e.g., about 50 to 60m from the bottom of the ship) is used as the true log speed V, the correction coefficient α which is a ratio of the flow velocity U at each water depth H to the log speed V may be obtained easily and accurately.

Due to the influence of the flow of sea water etc. which is different from the circumference of the hull 1, the variation in the flow velocity U may increase as the water depth H becomes deeper. In order to accurately acquire the water depth H where the change in the flow velocity U sufficiently converges, and the true log speed V, while reducing the influence of the variation, it may be effective to store a plurality of ship speed data 39 when the sea trial operation, the actual cruise, etc. are performed using the multilayer-type log speed meter (may include data for other ships of the same model), and to conduct a statistical analysis. This statistical analysis may be carried out for every navigational condition when the flow velocity U is measured. Therefore, in order to make this possible, the contents of the parameters of the navigational condition when the flow velocity U is measured may also be recorded on the ship speed data 39 in addition to the value of the flow velocity U and the log speed V.

### [Flow of Processing]

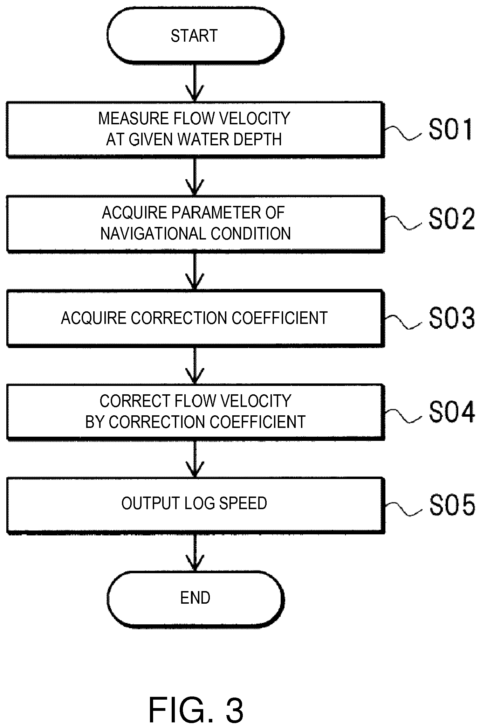

Fig. 3 is a flowchart schematically illustrating one example of a flow of the measurement processing of the log speed in this embodiment. As described above, the correction coefficient model is acquired by the actual measurement or simulation in advance, and it is set and registered to the speed meter processor 3 as the correction coefficient data 38. Moreover, like the common log speed meter, although the speed meter processor 3 is to measure the flow velocity U at a single water depth H, it may measure the flow velocity U at the plurality of water depths H using the multilayer-type log speed meter as disclosed in Patent Document 1.

First, the flow velocity U at a given water depth H may be measured (S01). Specifically, data of the time difference between the transmission wave emitted from the sensor 2 and the received reflective wave, and the frequency of the reflective wave may be acquired by the measurement module 32 of the speed meter processor 3, and the data may be recorded as the measurement data 37. Further, the flow velocity U may be calculated based on the measurement data 37 by the ship speed calculation module 33. The given water depth H may be, for example, about 20m, and may suitably be set according to the performance etc. of the sensor 2. When the multilayer-type log speed meter is used, the measurements and calculations of the respective flow velocities U at the plurality of water depths H may be performed. Note that, in order to reduce the influence of the disturbance due to the hull movement etc., it may be desirable to use a moving average, for example, between about 10 seconds to tens of seconds for the measurement data 37.

Next, the values of the parameters of the navigational condition (e.g., data according to the draft D) at the moment may be acquired by the navigational condition determination module 35 (S02). The values of the parameters acquired at this step may be considered to be values at a timing of the measurement of the flow velocity U at Step S01. Then, based on the contents of one or more acquired parameters (including both variable and invariable parameters), the correction coefficient α corresponding to the contents of the correction coefficient data 38 may be acquired by the correction coefficient acquisition module 34 (S03). As described above, for example, the correction coefficient α may be acquired based on the table which holds the correspondence between the value of each parameter and the correction coefficient α, or may be acquired by applying the parameters to the approximated function defined as the correction coefficient model. If the corresponding correction coefficient α cannot be acquired, the correction may not be performed (α= 1), or the correction coefficient α of which the contents of the parameters are closest, or a default value may be outputted.

Then, the flow velocity U may be corrected by the ship speed calculation module 33 by applying the correction coefficient α acquired at Step S03 to the flow velocity U calculated at Step S01 (S04), and the acquired value is outputted as the log speed V (S05). Upon the output, the log speed V may be recorded on the ship speed data 39, and outputted through the interface module 36 by a given method, or other given methods specified by the user.

Then, the processing at and after Step S01 may be repeated to continue the measurement processing of the log speed V until a termination of the acquisition processing of the ship speed is requested, based on the instructions from the user through the interface module 36, the instructions from the control module 31 resulting from given conditions (e.g., a stop of the ship etc.), etc. If the termination is requested, the measurement processing of the log speed may be terminated. Note that, when continuing the measurement processing of the log speed V, the reacquisition of the values of the parameters of the navigational condition acquired at Step S02, which are invariable during the cruise (e.g., the ship model, the draft D in some cases, or the like) may be omitted.

As described above, according to the log speed meter which is one embodiment of the present disclosure, it may be possible to obtain the suitable correction coefficient α for calculating the log speed V based on the measured flow velocity U in accordance with the parameters of the navigational condition of the ship (i.e. the draft D of the hull 1 and/or the ship speed (the flow velocity U), and e.g. the ship model (the shape of the hull 1), the water depth H at which the flow velocity is measured, etc.). Therefore, the accuracy of the measurement of the log speed V may be increased greatly.

Although the present disclosure made by the present inventors is concretely described above based on the embodiment, it should be appreciated that the present disclosure is not limited to the embodiment and is variously changeable without departing from the scope of the present disclosure. For example, the embodiment is to describe in detail in order to facilitate the illustration of the present disclosure, but is not necessarily limited to what provided with all the configurations described above. Moreover, addition, deletion, and substitution of other configurations may be possible for a part of the configuration of the embodiment.

### INDUSTRIAL APPLICABILITY

The present disclosure may be usable for the log speed meter which measures the log speed, and the method of correcting the measurement of the log speed meter.

### DESCRIPTION OF REFERENCE CHARACTERS

- 1: Hull
- 2: Sensor
- 3: Speed Meter Processor
- 31: Control Module
- 32: Measurement Module
- 33: Ship Speed Calculation Module
- 34: Correction Coefficient Acquisition Module
- 35: Navigational Condition Determination Module
- 36: Interface Module
- 37: Measurement Data
- 38: Correction Coefficient Data
- 39: Ship Speed Data

## Claims

1. A Doppler-type log speed meter configured to measure a log speed of a ship, the log speed meter comprising:
a measurement module (32) arranged to acquire data of a time difference between a transmission wave and a received reflective wave, and the frequency of the reflective wave, and to output the acquired data to a ship speed calculation module (33) as measurement data (37); and
a ship speed calculation module (33) which calculates a flow velocity (U) at a given water depth (H) in fluid where the ship is floating based on the measurement data;
wherein the ship speed calculation module (33) is arranged to correct the flow velocity to calculate the log speed (V),
**characterized by**:
a data store which holds information on different correction coefficients (38) according to navigational conditions of the ship; and
a correction coefficient acquisition module (34) which acquires the correction coefficient (α) corresponding to a navigational condition of the ship at a time of measuring the flow velocity, the navigational condition comprising at least one of a draft state (D) of the ship and the measured flow velocity (U),
wherein the ship speed calculation module (33) is arranged to correct the flow velocity based on the acquired correction coefficient (α) to calculate the log speed (V).

2. The log speed meter of claim 1, wherein the navigational condition further includes any one or more of the shape of a hull of the ship, the water depth (H) at which the flow velocity is measured, a water pressure at the water depth, a sea water density at the water depth, and a salt concentration at the water depth.

3. The log speed meter of claim 1 or 2, further comprising a navigation condition determination module (35) which determines a navigation condition of the ship and outputs it as a parameter value to the correction coefficient acquisition module (34).

4. The log speed meter of any of the preceding claims, wherein the speed calculation module (33) calculates respective flow velocities (U) at a plurality of water depths (H) and uses the flow velocity at the water depth where the rate of change in the flow velocity is below a given threshold.

5. A method of measuring a log speed of a ship using a Doppler-type log speed meter, the method comprising the steps of:
measuring (SOI) a flow velocity (U) at a given water depth in fluid where the ship is floating; and
correcting (S04) the flow velocity to calculate the log speed (V),
**characterized by**:
holding information on different correction coefficients according to a navigational condition of the ship;
acquiring (S02) information on a navigational condition of the ship at a time of measuring the flow velocity, the navigational condition comprising at least one of a draft state (D) of the ship and the measured flow velocity (U); and
acquiring (S03) the correction coefficient (α) corresponding to the acquired information on the navigational condition of the ship,
wherein the flow velocity is corrected based on the acquired correction coefficient (α) to calculate the log speed (V).

6. The method of claim 5, wherein the navigational condition further includes any one or more of the shape of a hull of the ship, the water depth (H) at which the flow velocity is measured, a water pressure at the water depth, a sea water density at the water depth, and a salt concentration at the water depth.

7. The method of claim 5 or 6, further comprising:
measuring a flow velocity at a plurality of water depths in fluid where the ship or another ship of the same model is floating; and
determining the correction coefficient (α) based on the flow velocity at a water depth where a rate of change in the flow velocity in a water depth direction becomes smaller than a given threshold.

## Patentansprüche

1. Ein Log-Geschwindigkeitsmesser vom Doppler-Typ, der konfiguriert ist, um eine Log-Geschwindigkeit eines Schiffes zu messen, der Log-Geschwindigkeitsmesser umfassend:
ein Messmodul (32), das angeordnet ist, um Daten einer Zeitdifferenz zwischen einer übertragungswelle und einer empfangenen reflektierenden Welle und der Frequenz der reflektierenden Welle zu erfassen, und die erfassten Daten als Messdaten (37) an ein Schiffsgeschwindigkeitsberechnungsmodul (33) auszugeben; und
ein Schiffsgeschwindigkeitsberechnungsmodul (33), das eine Strömungsgeschwindigkeit (U) bei einer gegebenen Wassertiefe (H) in Flüssigkeit, in der das Schiff schwimmt, basierend auf den Messdaten berechnet,
wobei das Schiffsgeschwindigkeitsberechnungsmodul (33) angeordnet ist, um die Strömungsgeschwindigkeit zu korrigieren, um die Log-Geschwindigkeit (V) zu berechnen,
charakterisiert durch:
einen Datenspeicher, der Informationen über verschiedene Korrekturkoeffizienten (38) gemäß den Navigationszuständen des Schiffes enthält; und
ein Korrekturkoeffizientenerfassungsmodul (34), das den Korrekturkoeffizienten (a) gemäß einem Navigationszustand des Schiffes zum Zeitpunkt der Messung der Strömungsgeschwindigkeit erfasst, wobei der Navigationszustand mindestens einen Entwurfszustand (D) des Schiffes und die gemessene Strömungsgeschwindigkeit (U) umfasst,
wobei das Schiffsgeschwindigkeitsberechnungsmodul (33) angeordnet ist, um die Strömungsgeschwindigkeit basierend auf dem erfassten Korrekturkoeffizienten (a) zu korrigieren, um die Log-Geschwindigkeit (V) zu berechnen.

2. Der Log-Geschwindigkeitsmesser nach Anspruch 1, wobei der Navigationszustand ferner irgendeine oder mehrere der Form eines Schiffrumpfs, die Wassertiefe (H), bei der die Strömungsgeschwindigkeit gemessen wird, einen Wasserdruck in der Wassertiefe, eine Meerwasserdichte in der Wassertiefe und eine Salzkonzentration in der Wassertiefe enthält.

3. Der Log-Geschwindigkeitsmesser nach Anspruch 1 oder 2, ferner umfassend ein Navigationszustandsbestimmungsmodul (35), das einen Navigationszustand des Schiffes bestimmt und als Parameterwert an das Korrekturkoeffizientenerfassungsmodul (34) ausgibt.

4. Der Log-Geschwindigkeitsmesser nach einem der vorhergehenden Ansprüche, wobei das Geschwindigkeitsberechnungsmodul (33) jeweilige Strömungsgeschwindigkeiten (U) bei einer Vielzahl von Wassertiefen (H) berechnet und die Strömungsgeschwindigkeit in der Wassertiefe, in der die Änderungsrate der Strömungsgeschwindigkeit unter einer gegebenen Schwelle liegt, verwendet.

5. Ein Verfahren zum Messen einer Log-Geschwindigkeit eines Schiffes unter Verwendung eines Log-Geschwindigkeitsmessers vom Doppler-Typ, das Verfahren umfassend die folgenden Schritte:
Messen (S01) einer Strömungsgeschwindigkeit (U) bei einer gegebenen Wassertiefe in Flüssigkeit, in der das Schiff schwimmt; und
Korrigieren (S04) der Strömungsgeschwindigkeit, um die Log-Geschwindigkeit (V) zu berechnen,
**gekennzeichnet durch**:
Halten von Informationen zu verschiedenen Korrekturkoeffizienten gemäß einem Navigationszustand des Schiffes;
Erfassen (S02) von Informationen über einen Navigationszustand des Schiffes zum Zeitpunkt der Messung der Strömungsgeschwindigkeit, wobei der Navigationszustand zumindest einen Entwurfszustand (D) des Schiffes und die gemessene Strömungsgeschwindigkeit (U) umfasst; und
Erfassen (S03) des Korrekturkoeffizienten (α) gemäß den erfassten Informationen über den Navigationszustand des Schiffes,
wobei die Strömungsgeschwindigkeit basierend auf dem erfassten Korrekturkoeffizienten korrigiert wird, um die Log-Geschwindigkeit (V) zu berechnen.

6. Das Verfahren nach Anspruch 5, wobei der Navigationszustand ferner irgendeine oder mehrere der Form eines Schiffsrumpfs, die Wassertiefe (H), bei der die Strömungsgeschwindigkeit gemessen wird, einen Wasserdruck in der Wassertiefe, eine Meerwasserdichte in der Wassertiefe und eine Salzkonzentration in der Wassertiefe enthält.

7. Das Verfahren nach Anspruch 5 oder 6, ferner umfassend:
Messen einer Strömungsgeschwindigkeit bei einer Vielzahl von Wassertiefen in Flüssigkeit, in der das Schiff oder ein anderes Schiff des gleichen Modells schwimmt; und
Bestimmen des Korrekturkoeffizienten (a) basierend auf der Strömungsgeschwindigkeit in einer Wassertiefe, in der eine Änderungsrate der Strömungsgeschwindigkeit in einer Wassertiefenrichtung kleiner als eine gegebene Schwelle wird.

## Revendications

1. Un compteur de vitesse loch de type Doppler configuré de façon à mesurer une vitesse loch d'un navire, le compteur de vitesse loch comprenant :
un module de mesure (32) agencé de façon à acquérir des données d'une différence temporelle entre une onde de transmission et une onde de réflexion reçue, et de la fréquence de l'onde de réflexion, et à produire en sortie les données acquises vers un module de calcul de vitesse de navire (33) sous la forme de données de mesure (37), et
un module de calcul de vitesse de navire (33) qui calcule une vitesse d'écoulement (U) à une profondeur d'eau donnée (H) dans un fluide dans lequel le navire flotte en fonction des données de mesure,
où le module de calcul de vitesse de navire (33) est agencé de façon à corriger la vitesse d'écoulement de façon à calculer la vitesse loch (V),
**caractérisé par** :
un espace mémoire de données qui contient des informations relatives à différents coefficients de correction (38) en fonction de conditions de navigation du navire, et
un module d'acquisition de coefficient de correction (34) qui acquiert le coefficient de correction (a) correspondant à une condition de navigation du navire à un instant de mesure de la vitesse d'écoulement, la condition de navigation comprenant au moins un élément parmi un état de tirant d'eau (D) du navire et la vitesse d'écoulement mesurée (U),
où le module de calcul de vitesse de navire (33) est agencé de façon à corriger la vitesse d'écoulement en fonction du coefficient de correction acquis (a) de façon à calculer la vitesse loch (V).

2. Le compteur de vitesse loch selon la Revendication 1, où la condition de navigation comprend en outre un élément quelconque ou plusieurs parmi la forme d'une coque du navire, la profondeur d'eau (H) à laquelle la vitesse d'écoulement est mesurée, une pression d'eau à la profondeur d'eau, une densité d'eau de mer à la profondeur d'eau et une concentration en sel à la profondeur d'eau.

3. Le compteur de vitesse loch selon la Revendication 1 ou 2, comprenant en outre un module de détermination de condition de navigation (35) qui détermine une condition de navigation du navire et la produit en sortie sous la forme d'une valeur de paramètre vers le module d'acquisition de coefficient de correction (34).

4. Le compteur de vitesse loch selon l'une quelconque des Revendications précédentes, où le module de calcul de vitesse (33) calcule des vitesses d'écoulement respectives (U) à une pluralité de profondeurs d'eau (H) et utilise la vitesse d'écoulement à la profondeur d'eau à laquelle le taux de changement de la vitesse d'écoulement est sous un seuil donné.

5. Un procédé de mesure d'une vitesse loch d'un navire au moyen d'un compteur de vitesse loch de type Doppler, le procédé comprenant les opérations suivantes :
la mesure (S01) d'une vitesse d'écoulement (U) à une profondeur d'eau donnée dans un fluide dans lequel le navire flotte, et
la correction (S04) de la vitesse d'écoulement de façon à calculer la vitesse loch (V),
**caractérisé par** :
la conservation d'informations relatives à différents coefficients de correction en fonction d'une condition de navigation du navire,
l'acquisition (S02) d'informations relatives à une condition de navigation du navire à un instant de mesure de la vitesse d'écoulement, la condition de navigation comprenant au moins un élément parmi un état de tirant d'eau (D) du navire et la vitesse d'écoulement mesurée (U), et
l'acquisition (S03) du coefficient de correction (a) correspondant aux informations acquises relatives à la condition de navigation du navire,
où la vitesse d'écoulement est corrigée en fonction du coefficient de correction acquis (a) de façon à calculer la vitesse loch (V).

6. Le procédé selon la Revendication 5, où la condition de navigation comprend en outre un élément quelconque ou plusieurs parmi la forme d'une coque du navire, la profondeur d'eau (H) à laquelle la vitesse d'écoulement est mesurée, une pression d'eau à la profondeur d'eau, une densité d'eau de mer à la profondeur d'eau et une concentration en sel à la profondeur d'eau.

7. Le procédé selon la Revendication 5 ou 6, comprenant en outre :
la mesure d'une vitesse d'écoulement à une pluralité de profondeurs d'eau dans un fluide dans lequel le navire ou un autre navire du même modèle flotte, et
la détermination du coefficient de correction (a) en fonction de la vitesse d'écoulement à une profondeur d'eau à laquelle un taux de changement de la vitesse d'écoulement dans une direction de profondeur d'eau devient inférieur à un seuil donné.
